Europäisches Patentamt

European Patent Office

Office européen des brevets

(11) Publication number: **0 303 173 B1**

(12) **EUROPEAN PATENT SPECIFICATION**

(45) Date of publication of patent specification: **15.12.93**  (51) Int. Cl.⁵: **C08J 5/18**, C08J 5/04, B29D 7/01, B29C 67/14

(21) Application number: **88112643.7**

(22) Date of filing: **03.08.88**

(54) **Sheet-form molded article composed of organic fiber and process for producing same.**

(30) Priority: **13.08.87 JP 202355/87**

(43) Date of publication of application:
**15.02.89 Bulletin 89/07**

(45) Publication of the grant of the patent:
**15.12.93 Bulletin 93/50**

(84) Designated Contracting States:
**DE FR GB NL**

(56) References cited:
**DE-C- 2 658 679**
**GB-A- 1 361 242**
**US-A- 4 029 835**

(73) Proprietor: **SUMITOMO CHEMICAL COMPANY, LIMITED**
**Kitahama 4-chome 5-33**
**Chuo-ku Osaka 541(JP)**

(72) Inventor: **Sugimoto, Hiroaki**
**13-5, Kawanishicho-1-chome**
**Takatsuki-shi(JP)**
Inventor: **Hayatsu, Kazuo**
**11-8, Kamihozumi-2-chome**
**Ibaraki-shi(JP)**
Inventor: **Itoh, Iko**
**7-12-201, Tsukahara-1-chome**
**Takatsuki-shi(JP)**
Inventor: **Yokogawa, Masayuki**
**174-1, Kanagawa**
**Kanadacho**
**Kawanoe-shi(JP)**

(74) Representative: **Henkel, Feiler, Hänzel & Partner**
**Möhlstrasse 37**
**D-81675 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

EP 0 303 173 B1

**Description**

INDUSTRIAL FIELD OF THE INVENTION

The present invention relates to a sheet-form molded article composed of organic fiber having a high strength and a high elastic modulus, resistant to heat and chemicals, and excellent in electrical properties.

PRIOR ART

In the recent years, the use of porous sheet-form molded articles is increasing. As examples of such porous sheet-form molded articles, electrical insulating paper, filter, speaker cone, construction materials, etc. can be referred to.

As the fiber used for forming such porous sheet-form molded articles, fibers light in weight, resistant to heat and chemicals, electrically insulating and having high strength and high elastic modulus are desirable.

As such a fiber, aromatic polyamide fibers (aramid fibers) of which typical examples are poly-p-phenylene terephthalamide and poly-m-phenylene isophthalamide have been used hitherto.

PROBLEM TO BE SOLVED BY THE INVENTION

Since p-type aromatic polyamide fibers have as high a melting point as 500°C or above, they cannot be made into a sheet-form product if they are used alone. Usually, they have been made into molded article by the use of a large amount of binder. Naturally, however, the binder does not satisfy the above-mentioned required performances. Thus, performances of this type of molded articles have hitherto been unable to reach the level expected from the performances of the p-type aromatic polyamide fiber itself.

On the other hand, m-type aromatic polyamide fibers have been unsatisfactory in chemical resistance and mechanical properties.

Although it is possible to use p-type aromatic polyamide fiber in combination with m-type aromatic polyamide fiber, such a combination has been unsatisfactory in the points of moisture absorption and chemical resistance.

It is the object of the present invention to provide a sheet-form molded article composed of organic fiber having a high strength and a high elastic modulus, resistant to heat and chemicals, excellent in electrical properties and low in water-absorption.

DE-C-2 658 679 discloses a sheet like electrical insulating material including an aromatic polyamide sheet like electrical insulating material, however this document does not disclose aromatic polyamides including at least 50% by mole p-phenylene terephthalamide units which, other than the m-type aromatic polyamide fibers, have considerable advantages.

MEANS FOR SOLUTION OF THE PROBLEM

The present invention relates to a sheet-form molded article constituted of 30 to 70% by weight of a fiber having a strength of 17.68 dN/tex (20 g/d) or above and an elastic modulus of 442.2 dN/tex (500 g/d) or above obtained from an aromatic polyamide of which 50% by mole or above is occupied by p-phenylene terephthalamide unit and 70 to 30% by weight of a fiber and/or film obtained from an aromatic polyester having a melting point or softening point of 250°C to 380°C, as well as to a process for producing said sheet-form molded article.

As an example of said fiber having a strength of 17.68 dN/tex (20 g/d) or above and an elastic modulus of 442.2 dN/tex (500 g/d) or above obtained from an aromatic polyamide of which 50% by mole or above is occupied by p-phenylene terephthalamide unit used in the invention, a fiber obtained by subjecting an aromatic polyamide mainly composed of poly-(p-phenylene terephthalamide) to a solution spinning process can be referred to.

The aromatic polyamide can be produced by various methods. For example, it can be synthesized by reacting an aromatic diamine and an aromatic dicarboxylic acid or derivatives of them in a polar solvent such as N-methylpyrrolidone, N,N-dimethylacetamide and the like or optionally in a mixed solvent system prepared by adding an inorganic salt such as calcium chloride, lithium chloride and the like to said polar solvent. Otherwise, it can be synthesized by a melt polymerization process using an aromatic diamine and an ester compound such as diphenyl ester of aromatic dicarboxylic acid and the like.

Examples of said aromatic diamine include p-phenylenediamine, m-phenylenediamine, methyl-p-phenylenediamine, 4,4'-dimethylbenzidine, 4,4'-diaminodiphenyl ether, 3,4'-diaminodiphenyl ether, 4,4'-

2

diaminodiphenylmethane, 2,6-diaminonaphthalene, 1,5-diaminonaphthalene and the like.

Examples of said aromatic dicarboxylic acid include terephthalic acid, isophthalic acid, 4,4'-dicarboxydiphenyl, 2,6-dicarboxynaphthalene and the like, as well as their nucleus-substituted products having alkyl, aryl, alkoxy or halogen group on their nucleus.

An important condition of the invention is that the p-phenylene terephthalamide unit occupies 50% by mole or more of the whole aromatic polyamide. Owing to this, the aromatic polyamide can be made into a fiber having a high crystallinity, excellent resistances to heat and chemicals, a high strength and a high elastic modulus.

The aromatic polyamide can be formed into fiber by solution spinning process. This may be achieved either by directly extruding a solution of aromatic polyamide into a coagulating bath or by once extruding the spinning solution into air and thereafter leading it into coagulating bath where the polyamide is coagulated to form a yarn. Although the fiber thus obtained is usable as it is, preferably it is subjected to a stretching treatment, a heat treatment or their combination. In the present invention, a fiber having a strength of 17.68 dN/tex (20 g/d) or above and an elastic modulus of 442.2 dN/tex (500 g/d) or above is used.

As the form of said aromatic polyamide, short fiber or pulp is preferable.

As said short fiber, that having a fiber length of 20 mm or less, preferably 10 mm or less and more preferably 5 mm or less is desirable. That having been fibrillated and made into a pulp is most desirable.

Said aromatic polyester having a melting or softening point of 250°C to 380°C inclusively means polyesters moldable in the molten state at a temperature of 250°C to 380°C selected from the polyesters formed from aromatic dicarboxylic acids, alicyclic dicarboxylic acids, aromatic diols, alicyclic diols, aliphatic diols and/or aromatic hydroxycarboxylic acids or their derivatives. Among them, aromatic polyesters exhibiting an anisotropy in the molten state are most preferable.

Herein, the term "melting point" means a temperature at which crystal melts, while the term "softening point" means a temperature at which a polymer can be molded in the molten state.

Examples of said polyester include polyethylene terephthalate; polyethylene-2,6-naphthalate; polyarylates prepared from terephthalic acid, isophthalic acid, 2,2'-bis-(4-hydroxyphenyl)-propane, hydroquinone and resorcinol; polyarylates exhibiting anisotropy in the molten state; polyester carbonates prepared from terephthalaic acid, 4,4'-dihydroxydiphenyl and carbonate group; and the like. Needless to say, those excellent in heat resistance and chemical resistance must be selected, so that those formed from aromatic dicarboxylic acid, aromatic diol and/or aromatic hydroxycarboxylic acid or their derivatives are preferable.

The term "aromatic polyester exhibiting anisotropy in the molten state" means aromatic polyesters which are capable of transmitting light in the flowable temperature range when a powdery sample of the aromatic polyester is put and heated on a heating plate held between two polarizers making an angle of 90°. Polyesters having such a property include those prepared from the aromatic dicarboxylic acids, aromatic diols and/or aromatic hydroxycarboxylic acids and derivatives of them disclosed in Japanese Patent Publication Nos. 55-20008 and 56-18016 or their derivatives. Optionally, the copolymers formed from these compounds and alicyclic dicarboxylic acids, alicyclic diols, aliphatic diols or their derivatives are also included. In this case, however, too great a deterioration of heat resistance and chemical resistance caused by introduction of the alicyclic group or aliphatic group must be avoided.

The aromatic dicarboxylic acids usable in the invention include terephthalic acid, isophthalic acid, 4,4'-dicarboxydiphenyl, 2,6-dicarboxynaphthalene, 1,2-bis(4-carboxyphenoxy)-ethane and the like, as well as their nucleus-substituted derivatives having alkyl, aryl, alkoxy or halogen group on their nuclues.

The aromatic diols usable in the invention include hydroquinone, resorcinol, 4,4'-dihydroxydiphenyl, 4,4'-dihydroxybenzophenone, 4,4'-dihydroxydiphenylethane, 4,4'-dihydroxydiphenyl ether, 4,4'-dihydroxydiphenyl sulfide, 2,2'-bis(4-hydroxyphenyl)-propane, 2,6-dihydroxynaphthalene, 1,5-dihydroxynaphthalene, 1,4-dihydroxynaphthalene and the like, as well as their nucleus-substituted derivatives having alkyl, aryl, alkoxy or halogen group on their nucleus.

The aromatic hydroxycarboxylic acids usable in the invention include p-hydroxybenzoic acid, m-hydroxybenzoic acid, 2-hydroxynaphthalene-6-carboxylic acid, 1-hydroxynaphthalene-5-carboxylic acid, p-4-hydroxyphenylbenzoic acid and the like, as well as their nucleus-substituted derivatives having alkyl, aryl, alkoxy or halogen group on their nucleus.

The alicyclic dicarboxylic acids usable in the invention include trans-1,4-dicarboxycyclohexane, cis-1,4-dicarboxycyclohexane and the like.

The alicyclic and aliphatic diols usable in the invention include xylylene diol, ethylene glycol, trans-1,4-dihydroxycyclohexane,cis-1,4-dihydroxycyclohexane and the like.

These aromatic polyesters can also be obtained in combination with a carbonic acid derivative such as diphenyl carbonate, phosgene and the like.

The aromatic polyester used in the invention can be obtained by polycondensing a combination of the above-mentioned starting materials or their derivatives by the method of esterification or ester interchange. As preferable examples of the aromatic polyester to which the present invention is applicable include the followings:

(1) A copolyester constituted of 40 to 70% by mole of p-hydroxybenzoic acid residue, 15 to 30% by mole of the above-mentioned aromatic dicarboxylic acid residue and 15 to 30% by mole of aromatic diol residue.

(2) A copolyester constituted of terephthalic acid and/or isophthalic acid and chlorohydroquinone, phenylhydroquinone and/or hydroquinone.

(3) A copolyester constituted of 20 to 80% by mole of p-hydroxybenzoic acid residue and 20 to 80% by mole of 2-hydroxynaphthalene-6-carboxylic acid residue.

(4) Polyethylene terephthalate (melting point 280°C), polyethylene-2,6-naphthalate (melting point 260°C), a copolyester having a softening point of 300°C or above constituted of terephthalic acid, isophthalic acid and 2,2'-bis(4-hydroxyphenyl)-propane, and the like.

These polyesters can easily be molded in the state of melt and made into the intended fiber or film. Particularly, the polyesters exhibiting anisotropy in the molten state can easily be melt-spun, and the fiber thus obtained has a high strength and a high elastic modulus, can be fibrillated easily by applying a shear force thereto, and can be welded by heating without greatly affecting its properties.

As the polycondensation reaction for producing aromatic polyester, known processes of bulk polymerization, solution polymerization, suspension polymerization, etc. can be adopted. The polycondensation can be practised at a temperature of 150°C to 360°C, at ordinary pressure or a reduced pressure of 1333 to 133.3 Pa (10 to 0.1 Torr), optionally in the presence of a polymerization catalyst such as Sb, Ti, Ge compound or a stabilizer such as phosphorus compound, phenol compound or the like.

The formed polymer is heat-treated in an inert gas or at a reduced pressure either as it is or in a powdery state to give a sample for molding in the molten state. Otherwise, it is once granulated by means of extruder and then put to use.

As the apparatus for the molding in the molten state, known apparatuses can be used. The processing temperature suitable for spinning and film-formation is 280°C to 420°C, and preferably 300°C to 380°C. Though the fiber and film thus obtained can be used as they are, they may be subjected to heat treatment, stretching or their combination and then put to use.

As the form of the aromatic polyester fiber, short fiber and pulp are desirable. As the short fiber, those having a fiber length of 20 mm or less, preferably 10 mm or less and more preferably 5 mm or less are desirable. Those fibrillated and made into a pulp are most desirable.

As the method for making the aromatic polyamide fiber or aromatic polyester fiber into a short fiber or pulp, a method which comprises cutting monofilament of fiber, multifilament yarn or jet-spun product into a short fiber either as they are or after immobilizing them with a resin can be referred to. As the resin used for the immobilization, those soluble in water or low-boiling organic solvent and therefore removable by dissolution after the cutting process are preferable. As an example of such resin, polyvinyl alcohol can be referred to.

The short fiber thus obtained can be made into pulp by the method of beating in dryness or wetness.

In forming a sheet-form article from the short fiber or pulp, the short fiber or pulp is preferably fibrillated. As the method for the fibrillation, a shear force is applied to the short fiber or pulp. For applying the shear force, various grinders, mills, pulverizers, stone mills, beaters, refiners, mixers and the like are used either in dryness or in wetness.

The fibrillated short fiber and pulp thus obtained can be made into a sheet-form article such as paper, according to the same method as in the pulp industry.

From the viewpoint of content of the aromatic polyester, the film prepared from the aromatic polyester by the molding in the state of melt has a thickness of 0.01 to 0.8 mm and more preferably 0.05 to 0.3 mm. By putting an aromatic polyamide fiber between such films, optionally laminating them and then heating and melting them, a sheet-form molded article is obtained.

Though the sheet-form molded article thus obtained can be used as it is, preferably it is heat-treated. As the method of heat-treatment, a heat-treatment in standing in an oven, a heat-treatment on conveyer passing through an oven, and a heat-treatment which comprises holding the article between hot rolls and heating it continuously optionally with a compressive force can be referred to. The temperature of the heat-treatment is 150°C to 380°C, preferably 220°C to 350°C, and more preferably 250°C to 330°C. The retention time ranges from several seconds to 10 hours, and preferably from one minute to 3 hours.

EFFECT OF THE INVENTION

The sheet-form molded article of the invention has a high strength, a high elastic modulus, a heat resistance and a chemical resistance and is characterized by its excellent electrical properties and low moisture-absorption.

The sheet-form molded article of the invention can be used as an electrically insulating paper having a heat resistance of grade F or above, various filters, a material for audio instruments, and a reinforcing material for FRP, FRTP, FRC, etc.

Working Examples

Hereunder, examples of the invention will be presented for the sake of facilitating the understanding of the invention. These examples are nothing other than illustrative examples, and the invention is by no means limited by them.

The physical data shown in the examples were measured in the following manner.

(1) Tensile test of fiber

A monofilament having a fiber length of 50 mm was fixed at a sample distance of 20 mm and stretched at a tensile speed of 2 mm/minute. The result was recorded at a chart speed of 200 mm/minute. The number of sample was 15. After excepting the samples having exhibited the maximum and minimum strength and modulus, mean values of the results given by the other samples were calculated.

(2) Tenacity of composite paper

According to JIS P 8813 (1976), a paper cut into a size of 100 mm (length) x 25 mm (width) was stretched at a sample distance of 80 mm and tensile speed of 2 mm/minute. The parts grasped by the chucks were previously protected with a double-coated tape in order to prevent the break at chuck part. The number of sample was 5. Tenacity was expressed by "length at break" as shown below, and mean value was calculated. A greater length at break means a greater tenacity.

$$
\begin{array}{l}
\text{Length} \\
\text{at break} \\
\text{(km)}
\end{array}
=
\left(
\begin{array}{l}
\text{Strength} \\
\text{found} \\
\text{(kgf)}
\end{array}
\right)
\bigg/
\left(
\begin{array}{l}
\text{Width of} \\
\text{test piece} \\
\text{(mm)}
\end{array}
\right)
\bigg/
\left(
\begin{array}{l}
\text{Basis weight} \\
\text{of test} \\
\text{piece (g/m}^2\text{)}
\end{array}
\right)
\quad \times 1{,}000
$$

(3) Water absorbability of composite paper

After drying about 5 g of a sample sheet under reduced pressure at 150°C for 15 hours, it was weighed. Then, it was allowed to stand in a thermostatted bath kept at 23°C, 65% RH for 40 hours, after which it was again weighed. The increase in weight was taken as water absorbability (%).

(4) Dielectric constant

A composite paper gas cut into a size of 10 cm x 10 cm, dipped in a methylcellosolve solution containing Sumiepoxy ESA-011 (epoxy resin manufactured by Sumitomo Chemical Co., Ltd.) and an amine type initiator (epoxy resin 100 g, amine initiator 4 g, methylcellosolve 40 g), taken out, air-dried, and semi-cured at 130°C for 10 minutes.

After superposing the semi-cured products, the whole was compression-molded at 160°C for 30 minutes under a pressure of 4903 kPa (50 kg/cm$^2$). After the molding, it was post-cured at 160°C for one hour to obtain a molded article having a thickness of 2 to 3 mm in which the volume fraction of organic fiber composite paper was about 40%.

Dielectric constant of this molded article was determined by the mutual induction bridge method according to JIS K 6911-5-14.

Referential Example 1

Into a polymerization reactor equipped with a comb-like stirrer, 7.2 kg (40 moles) of p-acetoxybenzoic acid, 2.49 kg (15 moles) of terephthalic acid, 0.83 kg (5 moles) of isophthalic acid and 4.93 kg (20.2 moles) of 2,6-diacetoxynaphthalene were charged. While stirring them in an atmosphere of nitrogen, the temperature was elevated. At 330°C, a polymerization was carried out for one hour with a powerful stirring, while removing the generated acetic acid. After cooling the reaction mixture, the polymer was taken out. Its yield was 10.23 kg, which corresponded to 96.5% based on the theoretical yield. The polymer exhibited an optical anisotropy in the molten state at a temperature of 320°C or above.

The polyester thus obtained was subjected to a melt spinning by means of a screw extruder having a diameter of 30 mm. The die used had a hole diameter of 0.07 mm, a hole length of 0.14 mm and a hole number of 308. By carrying out the spinning at 340°C, a light yellowed colored transparent fiber was obtained.

Its properties were as follows:

| Density | 1.33 g/ml |
|---|---|
| Fiber diameter | 17.8 $\mu$m |
| Strength | 10.8 dN/tex (12.2 g/d) |
| Elastic modulus | 486.4 dN/tex (550 g/d) |

Referential Example 2

Into the same polymerization reactor as in Referential Example 1, 5.4 kg (30 moles) of p-acetoxybenzoic acid and 4.6 kg (20 moles) of 2-acetoxy-6-carboxynaphthalene were charged. The mixture was polymerized in the same manner as in Referential Example 1 to obtain an aromatic polyester in a yield of 8.26 kg (98.3% based on the theoretical yield).

This polyester exhibited an optical anisotropy in the molten state at a temperature of 335°C or above.

This aromatic polyester was subjected to a jet spinning at 350°C. In carrying out the jet spinning, a suction hole was attached to an under area of the spinning die, and a high speed gas flow was blown underward from the die, whereby the fiber coming out of the die flew underward and was collected on a metallic wire gauze placed there. The fiber thus obtained gas a gold-colored transparent fiber having a fiber length of 5 to 35 mm.

Its properties were as follows:

| Density | 1.33 g/ml |
|---|---|
| Fiber diameter | 17.6 $\mu$m |
| Strength | 10.4 dN/tex (11.8 g/d) |
| Elastic modulus | 424.5 dN/tex (480 g/d) |

Referential Example 3

Into the same polymerization reactor as in Referential Example 1, 3.60 kg (20.0 moles) of p-acetoxybenzoic acid, 4.74 kg (15.2 moles) of 2,2-bis(4-acetoxyphenyl)-propane and 2.49 kg (15.0 moles) of terephtahlic acid were charged. They were polymerized in the same manner as in Referential Example 1 to obtain an aromatic polyester in a yield of 7.52 kg (96.8% based on the theoretical yield).

Though melting point of this aromatic polyester was not clear, it melted and became flowable above 310°C. This polyester was extruded in melt at 340°C by means of a single shaft type extruder equipped with a T-die to prepare a film. The T-die had a slit width of 30 cm and a slit-to-slit distance of 0.2 mm. The film had a mean thickness of 55 microns.

Example 1

A poly-p-phenylene terephthalamide fiber of the following properties:

| Density | 1.44 g/ml |
|---|---|
| Fiber diameter | 12.8 $\mu$m |
| Strength | 18.7 dN/tex (21.2 g/d) |
| Elastic modulus | 502.3 dN/tex (568 g/d) |

and the aromatic polyester fiber obtained in Referential Example 1 were separately cut into a length of 10 mm by an idential rotary gear cutter. The fibers thus obtained (500 g each) were mixed together and beaten in 8 liters of water for 30 minutes by the use of Niagara Falls type of wet beater. After the beating, both the fibers had been fibrillated to form pulps. The pulp mixture thus obtained was made into a paper having a size of 20 cm x 20 cm and a basis weight of about 60 g/m$^2$, in the presence of water. The pulp paper was dried, compressed at room temperature by means of rolls, and then subjected to a compressive heat treatment by means of rolls having temperatures of 280°C and 350°C to prepare a composite pulp paper.

Microscopic examination of the composite pulp paper thus obtained revealed that the aromatic polyester fiber obtained in Referential Example 1 partially melted and adhered mutually.

Its water absorbability was 1.3%, and its length at beark was 2.90 km. When this composite pulp paper was treated with refluxing xylene at 140°C for 8 hours, its length at break was 2.82 km. When the same pulp paper was allowed to stand in the air at 250°C for 6 hours, its length at break was 3.05 km. These data demonstrate its excellency in chemical resistance and heat resistance.

When the composite pulp paper was impregnated with epoxy resin and dielectric constant of the FRP was determined at a pulp content of 41%, it was 3.5 at 1 MHz.

Comparative Example 1

A pulp paper was prepared in the same manner as in Example 1, except that only the same poly-p-phenylene terephthalamide fiber as in Example 1 was used.

The pulp paper thus obtained was so weak that its tenacity could not be measured.

Comparative Example 2

A composite pulp paper was prepared in the same manner as in Example 1, except that the same poly-p-phenylene terephthalamide as in Example 1 and a poly-m-phenylene isophthalamide having the following properties:

| Density | 1.39 g/ml |
|---|---|
| Fiber diameter | 15.7 $\mu$m |
| Strength | 9.02 dN/tex (10.2 g/d) |
| Elastic modulus | 159.1 dN/tex (180 g/d) |

were used. Its water absorbability was 3.8%, and its length at break was 1 km or shorter.

When this composite pulp paper was impregnated with epoxy resin and dielectric constant of the FRP was determined at a pulp content of 39%, it was 4.2 at 1 MHz, which was inferior to that in the present invention.

Example 2

A composite pulp paper was prepared in the same manner as in Example 1, except that the same poly-p-phenylene terephthalamide fiber as in Example 1 and the aromatic polyester fiber obtained in Referential Example 1 were mixed together at a ratio of 35 : 65 by weight.

The composite pulp paper thus obtained was heat-treated by placing it in an oven kept at 320°C in an atmosphere of nitrogen for one hour.

The pulp paper thus obtained had a water-absorbability of 1.0% and its length at break was 3.19 km. When it was treated in boiling xylene at 140°C for 8 hours and when it was allowed to stand in the air at 250°C for 6 hours, the length at break was 3.15 km and 3.21 km, respectively, demonstrating its excellency in chemical and heat resistances.

When the composite pulp paper was impregnated with epoxy resin and dielectric constant of the FRP was determined at a pulp content of 38%, it was 3.4 at 1 MHz.

## Example 3

The same poly-p-phenylene terephthalamide fiber as in Example 1 and the aromatic polyester fiber obtained in Referential Example 2 were used at a mixing ratio of 35 : 65 by weight. Thus, a composite pulp paper was prepared in the same manner as in Example 1, except that, without cutting the aromatic polyester fiber obtained in Referential Example 2, it was directly mixed with short fiber of the poly-p-phenylene terephtahlamide fiber, charged into a wet type beater and fibrillated in water.

Water-absorbability of the composite pulp paper thus obtained was 1.4%, and its length at break was 3.24 km. When this composite pulp paper was treated in boiling xylene at 140°C for 8 hours and when it was allowed to stand in the air at 250°C for 6 hours, the length at break was 3.18 and 3.29 km, respectively, demonstrating its excellency in chemical and heat resistances.

When this pulp paper was impregnated with epoxy resin and dielectric constant of the FRP was measured at a pulp content of 37%, it was 3.3 at 1 MHz.

## Comparative Example 3

A composite pulp paper was prepared in the same manner as in Example 1, except that only the aromatic polyester fiber obtained in Referential Example 2 was used and, without cutting the polyester fiber, it was directly charged into a wet type beater and fibrillated in water.

The composite pulp paper thus obtained had a water-absorbability of 0.2%, and its length at break was 2.87 km. When it was allowed to stand in the air at 250°C for 6 hours, its length at break dropped to 2.01 km.

When the composite pulp paper was impregnated with epoxy resin, a molded article having voids and undesirable wettability at fiber surface was obtained.

## Example 4

A composite pulp paper was prepared in the same manner as in Example 1, except that the same poly-p-phenylene terephtahlamide fiber as in Example 1 and the aromatic polyester fiber obtained in Referential Example 1 were mixed together at a ratio of 65 : 35 by weight.

The composite pulp paper thus obtained had a water-absorbability of 1.8%, and its length at break was 3.01 km. When this composite pulp paper was treated with boiling xylene at 140°C for 8 hours and when it was allowed to stand in the air at 250°C for 6 hours, the length at break was 3.07 and 3.12 km, respectively, demonstrating its excellency in chemical and heat resistances.

When the composite pulp paper was impregnated with epoxy resin and the dielectric constant of the FRP was measured at a pulp content of 41%, it was 3.7 at 1 MHz.

## Example 5

A composite pulp paper was prepared in the same manner as in Example 3, except that an aromatic polyamide fiber having 50% by mole of p-phenylene terephthalamide unit composed of 25% by mole of p-phenylenediamine unit, 25% by mole of 3,4'-diaminodiphenyl ether unit and 50% by mole of terephthalic acid unit and having the following properties:

| | |
|---|---|
| Density | 1.39 g/ml |
| Fiber diameter | 13.4 $\mu$m |
| Strength | 20.51 dN/tex (23.2 g/d) |
| Elastic modulus | 469.6 dN/tex (531 g/d) |

and the polyester fiber obtained in Referential Example 2 were mixed together at a ratio of 35 : 65 by weight.

The composite pulp paper thus obtained had a water-absorbability of 1.9%, and its length at break was 3.21 km. When this composite pulp paper was treated with boiling xylene at 140°C for 8 hours and when it was allowed to stand in the air at 250°C for 6 hours, the length at break was 3.23 and 3.37 km, respectively, demonstrating its excellency in chemical and heat resistances.

When this composite pulp paper was impregnated with epoxy resin and dielectric constant of the FRP was measured at a pulp content of 41%, it was 3.6 at 1 MHz.

Example 6

A composite pulp paper was prepared in the same manner as in Example 1 by using the same poly-p-phenylene terephtahlamide fiber as in Example 1 and a polyethylene terephthalate fiber pulp (fiber diameter 5 to 25 microns, fiber length 1 to 7 mm) were mixed together at a ratio of 50 : 50 by weight, except that a compressive heat processing was carried out with rolls having temperatures of 280°C and 310°C.

The composite pulp paper thus obtained had a water-absorbability of 1.7%, and its length at break was 3.51 km. When this composite pulp paper was treated with boiling xylene at 140°C for 8 hours, its length at break was 3.43 km, demonstrating its excellent chemical resistance.

When this composite pulp paper was impregnated with epoxy resin and dielectric constant of the FRP was measured at a pulp content of 39%, it was 3.5 at 1 MHz.

Example 7

The same poly-p-phenylene terephthalamide fiber as in Example 1 and the polyarylate film of Referential Example 3 were used.

The poly-p-phenylene terephthalamide fiber was spread between two sheets of the polyacrylate film. Three layers of the structure thus obtained were superposed and preliminarily dried at 150°C for 2 hours. Then, the whole was subjected to compression molding at 360°C under a pressure of 9806 kPa (100 kg/cm$^2$). The mixing ratio was 38 : 62 by weight.

The composite pulp paper thus obtained had a water absorbability of 1.9%, and its length at break was 3.88 km. When this composite pulp paper was treated with boiling xylene at 140°C for 8 hours and when it was allowed to stand in the air at 250°C for 6 hours, the length at break was 3.77 and 3.72 km, respectively, demonstrating its excellency in chemical and heat resistances.

Dielectric constant of this composite pulp paper was 3.0 at 1 MHz.

## Claims

1. A sheet-form molded article comprising 30 to 70% by weight of an aromatic polyester and 70 to 30% by weight of an aromatic polyamide, characterized in that said article consists of 30 to 70% by weight of a fiber having a strength of 17.68 dN/tex (20 g/d) or above and an elastic modulus of 442.2 dN/tex (500 g/d) or above prepared from an aromatic polyamide of which 50% by mole or above is occupied by p-phenylene terephthalamide unit and 70 to 30% by weight of a fiber and/or film prepared from an aromatic polyester having a melting or softening point of 250°C to 380°C.

2. A sheet-form molded article according to Claim 1, wherein said aromatic polyester exhibits an anisotropy in the molten state at a temperature of 250°C to 380°C.

3. A sheet-form molded article according to Claim 1 or 2, wherein said fiber prepared from an aromatic polyamide of which 50% by mole or above is occupied by p-phenylene terephthalamide unit is an elementary material selected from the group consisting of short fiber and pulp.

4. A sheet-form molded article according to Claim 1 or 2, wherein said fiber prepared from an aromatic polyester having a melting or softening point of 250°C to 380°C is an elementary material selected from the group consisting of short fiber and pulp.

5. A process for producing a sheet-form molded article which comprises combining 30 to 70% by weight of a fiber having a strength of 17.68 dN/tex (20 g/d) or above and an elastic modulus of 442.2 dN/tex (500 g/d) or above prepared from an aromatic polyamide of which 50% by mole or above is occupied by p-phenylene terephthalamide unit with 70 to 30% by weight of a fiber and/or film prepared from an aromatic polyester having a melting or softening point of 250°C to 380°C, followed by forming the

EP 0 303 173 B1

combined product into a sheet, and then heat-treating the sheet at a temperature of 250°C to 380°C.

**Patentansprüche**

1. Lagenartiger Formling, umfassend 30 bis 70 Gew.% eines aromatischen Polyesters und 70 bis 30 Gew.% eines aromatischen Polyamids, dadurch gekennzeichnet, daß der Formling aus 30 bis 70 Gew.% einer Faser einer Festigkeit von 17,68 dN/tex (20g/d) oder darüber und eines Elastizitätsmoduls von 442,2 dN/tex (500 g/d) oder darüber, die aus einem aromatischen Polyamid mit 50 Mol% oder mehr p-Phenylenterephthalamideinheitenhergestellt wurde, und aus 70 bis 30 Gew.% einer Faser und/oder eines Films aus einem aromatischen Polyester eines Schmelz- oder Erweichungpunkts von 250 bis 380°C besteht.

2. Lagenförmiger Formling nach Anspruch 1, wobei der aromatische Polyester in geschmolzenem Zustand bei einer Temperatur von 250 bis 380°C Anisotropie zeigt.

3. Lagenförmiger Formling nach Anspruch 1 oder 2, wobei es sich bei der aus einem aromatischen Polyamid mit 50 Mol% oder mehr p-Phenylenterephthalamideinheiten hergestellten Faser um ein elementares Material aus der Gruppe Kurzfaser und Pulpe handelt.

4. Lagenförmiger Formling nach Anspruch 1 oder 2, wobei es sich bei der aus einem aromatischen Polyester mit einem Schmelz- oder Erweichungspunkt von 250°C bis 380°C hergestellten Faser um ein elementares Material aus der Gruppe Kurzfaser und Pulpe handelt.

5. Verfahren zur Herstellung eines lagenförmigen Formlings durch Vereinigen von 30 bis 70 Gew.% einer Faser einer Festigkeit von 17,68 dN/tex (20g/d) oder darüber und eines Elastizitätsmoduls von 442,2 dN/tex (500 g/d) oder darüber, die aus einem aromatischen Polyamid mit 50 Mol% oder mehr p-Phenylenterephthalamideinheiten hergestellt wurde, mit 70 bis 30 Gew.% einer Faser und/oder eines Films aus einem aromatischen Polyester eines Schmelz- oder Erweichungspunkts von 250 bis 380°C, Ausformen des vereinigten Produkts zu einer Lage und anschließendes Wärmebehandeln der Lage bei einer Temperatur von 250 bis 380°C.

**Revendications**

1. Produit moulé en forme de feuille comprenant 30 à 70% en poids d'un polyester aromatique et 70 à 30% en poids d'un polyamide aromatique, caractérisé en ce que ledit produit consiste en 30 à 70% en poids d'une fibre ayant une résistance de 17,68 dN/tex (20 g/d) ou supérieure et un module d'élasticité de 442,2 dN/tex (500 g/d) ou supérieur, cette fibre étant préparée à partir d'un polyamide aromatique dont au moins 50% en mole des motifs sont constitués de p-phénylène-téréphtalamide, et en 70 à 30% en poids d'une fibre et/ou d'un film préparé à partir d'un polyester aromatique ayant un point de fusion ou de ramollissement de 250°C à 380°C.

2. Produit moulé en forme de feuille selon la revendication 1, dans lequel ledit polyester aromatique présente une anisotropie à l'état fondu à une température de 250°C à 380°C.

3. Produit moulé en forme de feuille selon la revendication 1 ou 2, dans lequel ladite libre préparée à partir d'un polyamide aromatique dont au moins 50% en mode des motifs sont constitués de p-phénylène-téréphtalamide est un matériau élémentaire choisi dans le groupe consistant en fibres courtes et en pâte.

4. Produit moulé en forme de feuille selon la revendication 1 ou 2, dans lequel ladite fibre préparée à partir d'un polyester aromatique ayant un point de fusion ou de ramollissement de 250°C à 380°C, est un matériau élémentaire choisi dans le groupe consistant en fibres courtes et en pâte.

5. Procédé de préparation d'un produit moulé en forme de feuille qui comprend la combinaison de 30 à 70% en poids d'une fibre ayant une résistance de 17,68 dN/tex (20 g/d) ou supérieure et un module d'élasticité de 442,2 dN/tex (500 g/d) ou supérieur, préparée à partir d'un polyamide aromatique dont au moins 50% en mole des motifs sont constitués de p-phénylène-téréphtalamide et de 70 à 30% en poids d'une fibre et/ou d'un film préparé à partir d'un polyester aromatique ayant un point de fusion ou

10

de ramollissement de 250°C à 380°C, suivie de la mise en forme du produit résultant de la combinaison en une feuille, puis du traitement thermique de la feuille à une température de 250°C à 380°C.